# EUROPEAN PATENT APPLICATION

(11) **EP 4 653 559 A1**
(43) Date of publication of application: **26.11.2025**
(21) Application number: 24744655.2
(22) Date of filing: 16.01.2024
(51) Int. Cl.: C22B 19/20, C22B 3/12

(54) **ZINC RECOVERY METHOD AND ZINC FERRITE DECOMPOSITION METHOD**

(30) Priority: 17.01.2023 JP 2023004975
(71) Applicant: Kinotech Corporation, Tokyo 103-0027 (JP); The University of Tokyo, Bunkyo-ku, Tokyo 113-8654 (JP)
(72) Inventor: MOTOBA, Kazuhiko, Tokyo 103-0027 (JP); MATSUURA, Hiroyuki, Tokyo 113-8654 (JP); HAIKI, Kenji, Tokyo 103-0027 (JP); TOMONAGA, Sakiko, Tokyo 103-0027 (JP); TAMAI, Yoshie, Tokyo 103-0027 (JP); MORI, Shuji, Tokyo 103-0027 (JP)
(74) Representative: v. Bezold & Partner Patentanwälte - PartG mbB
(86) International application number: PCT/JP2024/000978
(87) International publication number: WO 2024/154734

(57) **Abstract**

In a zinc recovery method or a zinc ferrite decomposition method, a raw material (1) containing a zinc component and zinc ferrite or a processed raw material (3) obtained by processing the raw material (1) and an aqueous alkali hydroxide solution (5) or (14) are brought into contact with each other, a temperature of the raw material (1) or the processed raw material (3) and the aqueous alkali hydroxide solution (5) or (14) brought into contact with each other is raised by heating the raw material (1) or the processed raw material (3) and the aqueous alkali hydroxide solution (5) or (14) to a temperature reaching a boiling point of water exhibiting a boiling point rise, a concentration of an alkaline agent contained in the aqueous alkali hydroxide solution (5) or (14) at a time of stop of evaporation of a water content of the aqueous alkali hydroxide solution (5) or (14) after the temperature reaches the boiling point is maintained, and zinc ferrite is decomposed into a zinc oxide component and an iron oxide component by contact of the alkaline agent whose concentration is maintained in a concentration maintaining step (102c) and zinc ferrite in the raw material (1) or the processed raw material (3) with each other.

## Description

### TECHNICAL FIELD

The present invention relates to a zinc recovery method and a zinc ferrite decomposition method, and particularly relates to a zinc recovery method and a zinc ferrite decomposition method that decompose zinc ferrite being a slightly soluble material contained in electric arc furnace dust generated in smelting and refining scrap in electric furnace steelmaking as one of iron making processes, primary dust such as blast furnace dust, blast furnace and converter dust, and RHF (Rotary Hearth Furnace) dust, secondary dust, zinc-containing dust such as roasting of zinc concentrate, and the like.

### BACKGROUND ART

In electric furnace steelmaking as one of iron making processes, electric arc furnace dust as industrial waste is generated in smelting and refining scrap, which corresponds to about 1.5% to 2.0% of the amount of steel production and contains a zinc oxide component. It is said that 8 million tons of electric arc furnace dust is generated in the world and 0.4 million tons is generated in Japan.

Most of iron scrap is waste buildings, waste home appliances, or waste automobiles. The coating base of waste buildings, waste home appliances, or waste automobiles is galvanized. The scrap contains paint, plastic, oil, and the like. Therefore, electric arc furnace dust contains harmful organic materials, such as chlorides and dioxins, in addition to heavy metals, such as zinc and lead. Meanwhile, electric arc furnace dust contains about 20% to 30% iron and 20% to 30% zinc. Crude zinc oxide in the secondary dust or the like contains about 10% iron and about 60% zinc. Therefore, electric arc furnace dust and the like are very useful as a resource.

Under such circumstances, Patent Document 1 relates to a zinc production method and discloses a configuration including a zinc-containing aqueous solution generation process 102 using an aqueous alkali hydroxide solution as an extraction solvent that selectively extracts a zinc component in a raw material such as electric arc furnace dust, an electrowinning process 103 performing electrolysis using the zinc-containing aqueous solution as an electrolyte to generate zinc, and a chlorine concentration adjustment process 101, prior to the electrowinning process 103, separating a chlorine component contained in the raw material such as the electric arc furnace dust to reduce the chlorine concentration in the zinc-containing aqueous solution.

### PRIOR ART DOCUMENT

### PATENT DOCUMENT

Patent Document 1: International Publication No. 2022/118927

### SUMMARY OF THE INVENTION

### PROBLEM TO BE SOLVED BY THE INVENTION

However, according to the study by the inventor of the present invention, although the configuration disclosed in Patent Document 1 includes the zinc-containing aqueous solution generation process 102 using an aqueous alkali hydroxide solution as an extraction solvent that selectively extracts a zinc component in a raw material such as electric arc furnace dust, it has been revealed that there is a certain limit to filterability when a solid content not dissolved in an aqueous solution of an alkaline agent 7 is filtered out and it is necessary to take some time for filtering out. In addition, it has also been revealed that it is difficult to dissolve zinc ferrite (ZnFe₂O₄) that is a compound containing an iron component and a zinc component and is frequently contained in large amounts in steelmaking dust, for example.

Further study by the inventor of the present invention has provided the finding that when electric arc furnace dust or the like containing zinc ferrite is immersed in molten sodium hydroxide that has been placed in a molten state by raising the temperature to 320°C or more in a vessel and is held for about 1 hour, thereafter a solidified matter after melting is obtained by lowering the temperature in the vessel, and the solidified matter is immersed in water in another vessel, a zinc component dissolved in the sodium hydroxide aqueous solution (a zinc-containing aqueous solution) and iron oxide being residue of the solidified matter are obtained. However, in this method, when the temperature of the sodium hydroxide aqueous solution in contact with the electric arc furnace dust or the like containing zinc ferrite is raised to 320°C or more, latent heat of evaporation that causes the water content contained in the aqueous solution to evaporate, sensible heat up to the melting point thereof, heat of fusion thereof, sensible heat for raising the temperature from the melting point, and the like are required. Accordingly, the energy consumption of heating increases, so that it is likely that not only the cost but also the environmental burden increase. Such circumstances are also assumed in a case of circulating and using a tailing electrolyte in order to reduce the amount of sodium hydroxide as an alkaline agent used. Meanwhile, when the evaporation rate of the water content of the aqueous alkali hydroxide solution is reduced, the solution may reach a substantially solid-like state that does not exhibit fluidity at completion of evaporation, and on the contrary, there is a possibility that the progress of decomposition of zinc ferrite is inhibited. That is, according to the studies by the inventor of the present invention, it is considered that a novel zinc recovery method that can recover zinc by decomposing zinc ferrite into a zinc oxide component and an iron oxide component while reducing the energy consumption of heating and restraining the cost increase and the increase in environmental burden and a zinc ferrite decomposition method decomposing this zinc ferrite are long awaited.

The present invention has been made through the above studies and it is an object of the present invention to provide a zinc recovery method that can recover zinc contained in zinc-containing dust or the like while reducing energy consumption of heating to restrain the cost increase and the increase in environmental burden and reliably decomposing zinc ferrite contained in the zinc-containing dust or the like, and a zinc ferrite decomposition method decomposing this zinc ferrite.

### MEANS FOR SOLVING THE PROBLEM

In order to achieve the above object, the inventor of the present invention has made further studies in order to bring zinc ferrite and an aqueous alkali hydroxide solution such as a sodium hydroxide aqueous solution into contact with each other to decompose zinc ferrite, and has found a phenomenon that decomposition of zinc ferrite occurs in a high-temperature high-concentration state that is at a temperature of 150°C or more that has been reached with a boiling point rise and in which the concentration of an alkaline agent such as sodium hydroxide in the aqueous alkali hydroxide solution is 70% by weight or more. The inventor has further studied this phenomenon and has obtained the following findings. In order to reliably decompose zinc ferrite, it is important to maintain this high-temperature high-concentration state for a predetermined time. In order to achieve this, it is necessary to seal a reaction vessel accommodating zinc ferrite and the aqueous alkali hydroxide solution, for example, to form a closed system and restrain evaporation of the water content at the time when the concentration of the alkaline agent in the aqueous alkali hydroxide solution has reached a high concentration with a boiling point rise, thereby maintaining such a high-temperature high-concentration state until completion of a decomposition reaction, because in an open system, for example, evaporation of the water content of the aqueous alkali hydroxide solution is fast, and the water content evaporates and dries up before completion of the decomposition reaction, resulting in a state where the decomposition reaction of zinc ferrite does not proceed at all. On the basis of these findings, the inventors have completed the present invention.

A zinc recovery method according to a first aspect of the present invention comprises: a high-temperature high-alkaline processing step that includes a contact step of bringing a raw material containing a zinc component and zinc ferrite or a processed raw material obtained by processing the raw material and an aqueous alkali hydroxide solution into contact with each other, a heating and temperature raising step of heating the raw material or the processed raw material and the aqueous alkali hydroxide solution brought into contact with each other in the contact step, and raising a temperature of the raw material or the processed raw material and the aqueous alkali hydroxide solution to a temperature reaching a boiling point of water exhibiting a boiling point rise, and a concentration maintaining step of maintaining a concentration of an alkaline agent contained in the aqueous alkali hydroxide solution at a time of stop of evaporation of a water content of the aqueous alkali hydroxide solution after the temperature reaches the boiling point, and that decomposes the zinc ferrite into a zinc oxide component and an iron oxide component by contact of the alkaline agent whose concentration is maintained in the concentration maintaining step and the zinc ferrite in the raw material or the processed raw material with each other; a first leaching step of, at a temperature less than the boiling point, bringing water into contact with the alkaline agent, the zinc oxide component, and the iron oxide component and leaching the zinc oxide component in an aqueous alkali hydroxide solution to obtain a first zinc-containing aqueous solution containing a zinc component and a slightly soluble material containing an iron oxide component not dissolved in the aqueous alkali hydroxide solution, thereby separating the slightly soluble material and the first zinc-containing aqueous solution from each other; and a zinc recovery step of recovering a zinc component originating from the first zinc-containing aqueous solution.

According to a second aspect of the present invention, in addition to the first aspect, the alkaline agent is sodium hydroxide or potassium hydroxide, and in the high-temperature high-alkaline processing step, at least one of a hydrogen peroxide solution and sodium nitrate as an oxidizing agent or at least one of sodium sulfite, sodium thiosulfate, sodium dithionite, hydrazine, and a zinc metal as a reducing agent is added to the aqueous alkali hydroxide solution.

According to a third aspect of the present invention, in addition to the first or second aspect, the alkaline agent is sodium hydroxide, and the method further comprises, prior to the high-temperature high-alkaline processing step, a halogen washing step of washing the raw material with a sodium hydroxide aqueous solution with a pH value in a range of 8.5 or more and 10.5 or less to wash a halogen component contained in the raw material.

According to a fourth aspect of the present invention, in addition to any of the first to third aspects, the method further comprises a purification step of bringing metallic zinc into contact with the first zinc-containing aqueous solution to cause reduction precipitation of a metal impurity component nobler than zinc in the first zinc-containing aqueous solution, thereby purifying the first zinc-containing aqueous solution.

According to a fifth aspect of the present invention, in addition to the fourth aspect, the zinc recovery step includes an electrowinning step of performing electrolysis using the first zinc-containing aqueous solution or the purified first zinc-containing aqueous solution as an electrolyte to obtain electrolytic zinc and a tailing electrolyte, the tailing electrolyte is delivered in a state with an aqueous alkali hydroxide solution and a zinc component left therein to the high-temperature high-alkaline processing step, and the aqueous alkali hydroxide solution in the tailing electrolyte and the raw material or the processed raw material are brought into contact with each other.

According to a sixth aspect of the present invention, in addition to the fourth aspect, the zinc recovery step includes a zinc carbonate separation step of separating the zinc component in the first zinc-containing aqueous solution or the purified first zinc-containing aqueous solution as zinc carbonate and obtaining a residual solution from which the zinc carbonate has been separated, the residual solution is delivered in a state with an aqueous alkali hydroxide solution and a zinc component left therein to the high-temperature high-alkaline processing step, and the aqueous alkali hydroxide solution in the residual solution and the raw material or the processed raw material are brought into contact with each other.

According to a seventh aspect of the present invention, in addition to the first or second aspect, the method further comprises, prior to the high-temperature high-alkaline processing step, a second leaching step of bringing the raw material or the processed raw material into contact with a sodium hydroxide aqueous solution to dissolve the zinc component contained in the raw material or the processed raw material in the sodium hydroxide aqueous solution, selectively extract the zinc component, and obtain a second zinc-containing aqueous solution containing the zinc component and a slightly soluble material containing zinc ferrite not dissolved in the sodium hydroxide aqueous solution, thereby separating the slightly soluble material and the second zinc-containing aqueous solution from each other, wherein the slightly soluble material containing zinc ferrite is delivered to the high-temperature high-alkaline processing step as the processed raw material and is decomposed into a zinc oxide component and an iron oxide component, and in the first leaching step, the zinc oxide component is dissolved in the sodium hydroxide aqueous solution to obtain a fourth zinc-containing aqueous solution containing a zinc component.

According to an eighth aspect of the present invention, in addition the seventh aspect, the fourth zinc-containing aqueous solution is delivered to the second leaching step, and the zinc component contained in the fourth zinc-containing aqueous solution is selectively extracted to become a portion of the second zinc-containing aqueous solution.

According to a ninth aspect of the present invention, in addition to the seventh or eighth aspect, the alkaline agent is sodium hydroxide, and the method further comprises, prior to the second leaching step, a halogen washing step of washing the raw material with a sodium hydroxide aqueous solution with a pH value in a range of 8.5 or more and 10.5 or less to wash a halogen component contained in the raw material and make the material into a processed raw material.

According to a tenth aspect of the present invention, in addition to any of the seventh to ninth aspects, the method further comprises a purification step of bringing metallic zinc into contact with the second zinc-containing aqueous solution to cause reduction precipitation of a metal impurity component nobler than zinc in the second zinc-containing aqueous solution, thereby purifying the second zinc-containing aqueous solution.

According to an eleventh aspect of the present invention, in addition to the tenth aspect, the zinc recovery step includes an electrowinning step of performing electrolysis using the second zinc-containing aqueous solution or the purified second zinc-containing aqueous solution as an electrolyte to obtain electrolytic zinc and a tailing electrolyte, the tailing electrolyte is delivered in a state with an aqueous alkali hydroxide solution and a zinc component left therein to the high-temperature high-alkaline processing step, and the aqueous alkali hydroxide solution in the tailing electrolyte and the raw material or the processed raw material are brought into contact with each other.

According to a twelfth aspect of the present invention, in addition to the tenth aspect, the zinc recovery step includes a zinc carbonate separation step of separating the zinc component in the second zinc-containing aqueous solution or the purified second zinc-containing aqueous solution as zinc carbonate and obtaining a residual solution from which the zinc carbonate has been separated, the residual solution is delivered in a state with an aqueous alkali hydroxide solution and a zinc component left therein to the high-temperature high-alkaline processing step, and the aqueous alkali hydroxide solution in the residual solution and the raw material or the processed raw material are brought into contact with each other.

According to a thirteenth aspect of the present invention, in addition to the first or second aspect, the method further comprises: a magnetic separation step of, prior to the high-temperature high-alkaline processing step, applying magnetic force to the raw material or the processed raw material via a magnet to separate a first separated material formed by a magnetic component adhering to the magnet and a second separated material not adhering to the magnet in accordance with magnetic strength of components in the raw material or the processed raw material; and a third leaching step, to which the second separated material is delivered, of leaching a zinc component contained in the second separated material in a sodium hydroxide aqueous solution and selectively extracting the zinc component to obtain a third zinc-containing aqueous solution containing the zinc component and a slightly soluble material not dissolved in the aqueous alkali hydroxide solution, thereby separating the slightly soluble material and the third zinc-containing aqueous solution from each other, wherein the first separated material is delivered to the high-temperature high-alkaline processing step as the processed raw material, and the zinc ferrite in the first separated material is decomposed into the zinc oxide component and the iron oxide component.

According to a fourteenth aspect of the present invention, in addition to the thirteenth aspect, the alkaline agent is sodium hydroxide, and the method further comprises, prior to the third leaching step, a halogen washing step of washing the raw material with a sodium hydroxide aqueous solution with a pH value in a range of 8.5 or more and 10.5 or less to wash a halogen component contained in the raw material and make the raw material into a processed raw material.

According to a fifteenth aspect of the present invention, in addition to the thirteenth or fourteenth aspect, the method further comprises a purification step of bringing metallic zinc into contact with the third zinc-containing aqueous solution to cause reduction precipitation of a metal impurity component nobler than zinc in the third zinc-containing aqueous solution, thereby purifying the third zinc-containing aqueous solution.

According to a sixteenth aspect of the present invention, in addition to the fifteenth aspect, the zinc recovery step includes an electrowinning step of performing electrolysis using the third zinc-containing aqueous solution or the purified third zinc-containing aqueous solution as an electrolyte to obtain electrolytic zinc and a tailing electrolyte, the tailing electrolyte is delivered in a state with an aqueous alkali hydroxide solution and a zinc component left therein to the high-temperature high-alkaline processing step, and the aqueous alkali hydroxide solution in the tailing electrolyte and the raw material or the processed raw material are brought into contact with each other.

According to a seventeenth aspect of the present invention, in addition to the fifteenth aspect, the zinc recovery step includes a zinc carbonate separation step of separating the zinc component in the third zinc-containing aqueous solution or the purified third zinc-containing aqueous solution as zinc carbonate and obtaining a residual solution from which the zinc carbonate has been separated, the residual solution is delivered in a state with an aqueous alkali hydroxide solution and a zinc component left therein to the high-temperature high-alkaline processing step, and the aqueous alkali hydroxide solution in the residual solution and the raw material or the processed raw material are brought into contact with each other.

A zinc ferrite decomposition method according to an eighteenth aspect comprises: a contact step of bringing a zinc-ferrite-containing material containing zinc ferrite and an aqueous alkali hydroxide solution into contact with each other; a heating and temperature raising step of heating the zinc-ferrite-containing material and the aqueous alkali hydroxide solution brought into contact with each other in the contact step to raise a temperature of the zinc-ferrite-containing material and the aqueous alkali hydroxide solution to a temperature reaching a boiling point of water exhibiting a boiling point rise; and a concentration maintaining step of maintaining a concentration of an alkaline agent contained in the aqueous alkali hydroxide solution at a time of stop of evaporation of a water content of the aqueous alkali hydroxide solution after the temperature reaches the boiling point, wherein the zinc ferrite is decomposed into a zinc oxide component and an iron oxide component by contact of the alkaline agent whose concentration is maintained in the concentration maintaining step and the zinc ferrite in the zinc-ferrite-containing material with each other.

### EFFECT OF THE INVENTION

According to the zinc recovery method of the first aspect of the present invention, the method includes: a high-temperature high-alkaline processing step that includes a contact step of bringing a raw material containing a zinc component and zinc ferrite or a processed raw material obtained by processing the raw material and an aqueous alkali hydroxide solution into contact with each other, a heating and temperature raising step of heating the raw material or the processed raw material and the aqueous alkali hydroxide solution brought into contact with each other in the contact step to raise a temperature of the raw material or the processed raw material and the aqueous alkali hydroxide solution to a temperature reaching a boiling point of water exhibiting a boiling point rise, and a concentration maintaining step of maintaining a concentration of an alkaline agent contained in the aqueous alkali hydroxide solution at the time of stop of evaporation of a water content of the aqueous alkali hydroxide solution after the temperature reaches the boiling point, and that decomposes the zinc ferrite into a zinc oxide component and an iron oxide component by contact of the alkaline agent whose concentration is maintained in the concentration maintaining step and the zinc ferrite in the raw material or the processed raw material with each other; a first leaching step of, at a temperature less than the boiling point, bringing water into contact with the alkaline agent, the zinc oxide component, and the iron oxide component and leaching the zinc oxide component in an aqueous alkali hydroxide solution to obtain a first zinc-containing aqueous solution containing a zinc component and a slightly soluble material containing an iron oxide component not dissolved in the aqueous alkali hydroxide solution, thereby separating the slightly soluble material and the first zinc-containing aqueous solution from each other; and a zinc recovery step of recovering a zinc component originating from the first zinc-containing aqueous solution. Accordingly, it is possible to recover zinc contained in zinc-containing dust or the like while reducing the energy consumption of heating, restraining the cost increase and the increase in environmental burden, and reliably decomposing zinc ferrite contained in the zinc-containing dust or the like. Further, by maintaining the concentration of the alkaline agent contained in the aqueous alkali hydroxide solution at the time of stop of evaporation of the water content of the aqueous alkali hydroxide solution after the temperature reaches the boiling point in the concentration maintaining step, pressure resistance of a reaction vessel such as a sealed vessel in this step can be lowered. Accordingly, the structure of the reaction vessel can be simplified, so that the cost can be reduced.

According to the zinc recovery method of the second aspect of the present invention, the alkaline agent is sodium hydroxide or potassium hydroxide, and in the high-temperature high-alkaline processing step, at least one of a hydrogen peroxide solution and sodium nitrate as an oxidizing agent or at least one of sodium sulfite, sodium thiosulfate, sodium dithionite, hydrazine, and a zinc metal as a reducing agent is added to the aqueous alkali hydroxide solution. Accordingly, zinc ferrite contained in the zinc-containing dust or the like can be decomposed more reliably.

According to the zinc recovery method of the third aspect of the present invention, the alkaline agent is sodium hydroxide, and the method further comprises, prior to the high-temperature high-alkaline processing step, a halogen washing step of washing the raw material with a sodium hydroxide aqueous solution with a pH value in a range of 8.5 or more and 10.5 or less to wash a halogen component contained in the raw material. Accordingly, the halogen component contained in the zinc-containing dust or the like can be eluted and washed reliably.

According to the zinc recovery method of the fourth aspect of the present invention, the method further comprises a purification step of bringing metallic zinc into contact with the first zinc-containing aqueous solution to cause reduction precipitation of a metal impurity component nobler than zinc in the first zinc-containing aqueous solution, thereby purifying the first zinc-containing aqueous solution. Accordingly, zinc in which mixing of impurities has been reduced can be recovered.

According to the zinc recovery method of the fifth aspect of the present invention, the zinc recovery step includes an electrowinning step of performing electrolysis using the first zinc-containing aqueous solution or the purified first zinc-containing aqueous solution as an electrolyte to obtain electrolytic zinc and a tailing electrolyte, the tailing electrolyte is delivered in a state with an aqueous alkali hydroxide solution and a zinc component left therein to the high-temperature high-alkaline processing step, and the aqueous alkali hydroxide solution in the tailing electrolyte and the raw material or the processed raw material are brought into contact with each other. Accordingly, electrolytic zinc in which mixing of impurities has been reduced can be recovered stably with a high yield.

According to the zinc recovery method of the sixth aspect of the present invention, the zinc recovery step includes a zinc carbonate separation step of separating the zinc component in the first zinc-containing aqueous solution or the purified first zinc-containing aqueous solution as zinc carbonate and obtaining a residual solution from which zinc carbonate has been separated, the residual solution is delivered in a state with an aqueous alkali hydroxide solution and a zinc component left therein to the high-temperature high-alkaline processing step, and the aqueous alkali hydroxide solution in the residual solution and the raw material or the processed raw material are brought into contact with each other. Accordingly, zinc carbonate in which mixing of impurities has been reduced can be recovered stably with a high yield.

According to the zinc recovery method of the seventh aspect of the present invention, the method further comprises, prior to the high-temperature high-alkaline processing step, a second leaching step of bringing the raw material or the processed raw material into contact with a sodium hydroxide aqueous solution to dissolve the zinc component contained in the raw material or the processed raw material in the sodium hydroxide aqueous solution, selectively extract the zinc component, and obtain a second zinc-containing aqueous solution containing the zinc component and a slightly soluble material containing zinc ferrite not dissolved in the sodium hydroxide aqueous solution, thereby separating the slightly soluble material and the second zinc-containing aqueous solution from each other. The slightly soluble material containing zinc ferrite is delivered to the high-temperature high-alkaline processing step as the processed raw material and is decomposed into a zinc oxide component and an iron oxide component, and in the first leaching step, the zinc oxide component is dissolved in the sodium hydroxide aqueous solution to obtain a fourth zinc-containing aqueous solution containing a zinc component. Accordingly, in a mode in which the energy consumption has been reduced, it is possible to efficiently recover zinc contained in zinc-containing dust or the like while decomposing zinc ferrite contained in the zinc-containing dust or the like more reliably.

According to the zinc recovery method of the eighth aspect of the present invention, the fourth zinc-containing aqueous solution is delivered to the second leaching step, and the zinc component contained in the fourth zinc-containing aqueous solution is selectively extracted to become a portion of the second zinc-containing aqueous solution. Accordingly, zinc contained in the zinc-containing dust or the like can be recovered more efficiently.

According to the zinc recovery method of the ninth aspect of the present invention, the alkaline agent is sodium hydroxide, and the method further comprises, prior to the second leaching step, a halogen washing step of washing the raw material with a sodium hydroxide aqueous solution with a pH value in a range of 8.5 or more and 10.5 or less to wash a halogen component contained in the raw material and make the material into a processed raw material. Accordingly, the halogen component contained in the zinc-containing dust or the like can be eluted and washed reliably.

According to the zinc recovery method of the tenth aspect of the present invention, the method further comprises a purification step of bringing metallic zinc into contact with the second zinc-containing aqueous solution to cause reduction precipitation of a metal impurity component nobler than zinc in the second zinc-containing aqueous solution, thereby purifying the second zinc-containing aqueous solution. Accordingly, zinc in which mixing of impurities has been reduced can be recovered.

According to the zinc recovery method of the eleventh aspect of the present invention, the zinc recovery step includes an electrowinning step of performing electrolysis using the second zinc-containing aqueous solution or the purified second zinc-containing aqueous solution as an electrolyte to obtain electrolytic zinc and a tailing electrolyte, the tailing electrolyte is delivered in a state with an aqueous alkali hydroxide solution and a zinc component left therein to the high-temperature high-alkaline processing step, and the aqueous alkali hydroxide solution in the tailing electrolyte and the raw material or the processed raw material are brought into contact with each other. Accordingly, electrolytic zinc in which mixing of impurities has been reduced can be recovered stably with a high yield.

According to the zinc recovery method of the twelfth aspect of the present invention, the zinc recovery step includes a zinc carbonate separation step of separating the zinc component in the second zinc-containing aqueous solution or the purified second zinc-containing aqueous solution as zinc carbonate and obtaining a residual solution from which the zinc carbonate has been separated, the residual solution is delivered in a state with an aqueous alkali hydroxide solution and a zinc component left therein to the high-temperature high-alkaline processing step, and the aqueous alkali hydroxide solution in the residual solution and the raw material or the processed raw material are brought into contact with each other. Accordingly, zinc carbonate in which mixing of impurities has been reduced can be recovered stably with a high yield.

According to the zinc recovery method of the thirteenth aspect of the present invention, the method further comprises: a magnetic separation step of, prior to the high-temperature high-alkaline processing step, applying magnetic force to the raw material or the processed raw material via a magnet to separate a first separated material formed by a magnetic component adhering to the magnet and a second separated material not adhering to the magnet in accordance with magnetic strength of components in the raw material or the processed raw material; and a third leaching step, to which the second separated material is delivered, of leaching a zinc component contained in the second separated material in a sodium hydroxide aqueous solution and selectively extracting the zinc component to obtain a third zinc-containing aqueous solution containing the zinc component and a slightly soluble material not dissolved in the aqueous alkali hydroxide solution, thereby separating the slightly soluble material and the third zinc-containing aqueous solution from each other. The first separated material is delivered to the high-temperature high-alkaline processing step as the processed raw material, and the zinc ferrite in the first separated material is decomposed into the zinc oxide component and the iron oxide component. Accordingly, in a mode in which the energy consumption has been reduced, it is possible to efficiently recover zinc contained in zinc-containing dust or the like while decomposing zinc ferrite contained in the zinc-containing dust or the like more reliably.

According to the zinc recovery method of the fourteenth aspect of the present invention, the alkaline agent is sodium hydroxide, and the method further comprises, prior to the third leaching step, a halogen washing step of washing the raw material with a sodium hydroxide aqueous solution with a pH value in a range of 8.5 or more and 10.5 or less to wash a halogen component contained in the raw material. Accordingly, the halogen component contained in the zinc-containing dust or the like can be eluted and washed reliably.

According to the zinc recovery method of the fifteenth aspect of the present invention, the method further comprises a purification step of bringing metallic zinc into contact with the third zinc-containing aqueous solution to cause reduction precipitation of a metal impurity component nobler than zinc in the third zinc-containing aqueous solution, thereby purifying the third zinc-containing aqueous solution. Accordingly, zinc in which mixing of impurities has been reduced can be recovered.

According to the zinc recovery method of the sixteenth aspect of the present invention, the zinc recovery step includes an electrowinning step of performing electrolysis using the third zinc-containing aqueous solution or the purified third zinc-containing aqueous solution as an electrolyte to obtain electrolytic zinc and a tailing electrolyte, the tailing electrolyte is delivered in a state with an aqueous alkali hydroxide solution and a zinc component left therein to the high-temperature high-alkaline processing step, and the aqueous alkali hydroxide solution in the tailing electrolyte and the raw material or the processed raw material are brought into contact with each other. Accordingly, electrolytic zinc in which mixing of impurities has been reduced can be recovered stably with a high yield.

According to the zinc recovery method of the seventeenth aspect of the present invention, the zinc recovery step includes a zinc carbonate separation step of separating the zinc component in the third zinc-containing aqueous solution or the purified third zinc-containing aqueous solution as zinc carbonate and obtaining a residual solution from which the zinc carbonate has been separated, the residual solution is delivered in a state with an aqueous alkali hydroxide solution and a zinc component left therein to the high-temperature high-alkaline processing step, and the aqueous alkali hydroxide solution in the residual solution and the raw material or the processed raw material are brought into contact with each other. Accordingly, zinc carbonate in which mixing of impurities has been reduced can be recovered stably with a high yield.

According to the zinc ferrite decomposition method of the eighteenth aspect of the present invention, the method includes: a contact step of bringing a zinc-ferrite-containing material containing zinc ferrite and an aqueous alkali hydroxide solution into contact with each other; a heating and temperature raising step of heating the zinc-ferrite-containing material and the aqueous alkali hydroxide solution brought into contact with each other in the contact step to raise the temperature of the zinc-ferrite-containing material and the aqueous alkali hydroxide solution to a temperature reaching a boiling point of water exhibiting a boiling point rise; and a concentration maintaining step of maintaining the concentration of an alkaline agent contained in the aqueous alkali hydroxide solution at the time of stop of evaporation of a water content of the aqueous alkali hydroxide solution after the temperature reaches the boiling point, and zinc ferrite is decomposed into a zinc oxide component and an iron oxide component by contact of the alkaline agent whose concentration is maintained in the concentration maintaining step and the zinc ferrite in the zinc-ferrite-containing material with each other. Accordingly, it is possible to reliably decompose zinc ferrite contained in zinc-containing dust or the like while reducing the energy consumption of heating and restraining the cost increase and the increase in environmental burden. Further, by maintaining the concentration of the alkaline agent contained in the aqueous alkali hydroxide solution at the time of stop of evaporation of the water content of the aqueous alkali hydroxide solution after the temperature reaches the boiling point in the concentration maintaining step, pressure resistance of a reaction vessel such as a sealed vessel in this step can be lowered. Accordingly, the structure of the reaction vessel can be simplified, so that the cost can be reduced.

### BRIEF DESCRIPTION OF THE DRAWINGS

[FIG. 1A] FIG. 1A is a process diagram of a zinc recovery method according to a first embodiment of the present invention.
[FIG. 1B] FIG. 1B is a process diagram of a zinc ferrite decomposition method included in the zinc recovery method according to the present embodiment.
[FIG. 2] FIG. 2 is a process diagram of a zinc recovery method including a zinc ferrite decomposition method according to a second embodiment of the present invention.
[FIG. 3] FIG. 3 is a process diagram of a zinc recovery method including a zinc ferrite decomposition method according to a third embodiment of the present invention.
[FIG. 4] FIG. 4 is a process diagram of a zinc recovery method including a zinc ferrite decomposition method according a fourth embodiment of the present invention.

### EMBODIMENT FOR CARRYING OUT THE INVENTION

A zinc recovery method and a zinc ferrite decomposition method according to embodiments of the present invention will be explained below in detail with reference to the drawings as appropriate.

### (First embodiment)

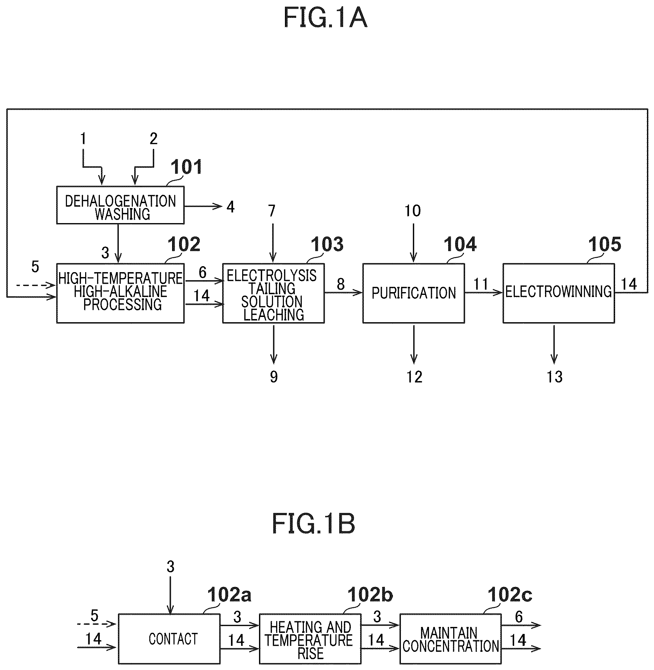

First, a zinc recovery method and a zinc ferrite decomposition method according to a first embodiment of the present invention are described in detail with reference to FIGS. 1.

FIGS. 1 are diagrams illustrating steps of a zinc recovery method including a zinc ferrite decomposition method according to the present embodiment. Specifically, FIG. 1A is a process diagram of the zinc recovery method according to the present embodiment, and FIG. 1B is a process diagram of the zinc ferrite decomposition method included in the zinc recovery method according to the present embodiment.

As illustrated in FIG. 1A, in the zinc recovery method according to the present embodiment, a dehalogenation washing process 101, a high-temperature high-alkaline processing process 102, a tailing electrolyte leaching process 103, a purification process 104, and an electrowinning process 105 are performed in turn. Focusing on decomposition of zinc ferrite, the high-temperature high-alkaline processing process 102 corresponds to all steps of the zinc ferrite decomposition method as illustrated in FIG. 1B. The electrowinning process 105 corresponds to a zinc recovery step. Descriptions are provided by referring to electric arc furnace dust 1 as a representative example of a raw material used in the recovery method and the decomposition method. However, the raw material is any material as long as it contains at least a zinc compound being zinc oxide or the like, an iron compound being iron oxide or the like, and zinc ferrite being a compound of iron and zinc. In addition to the electric arc furnace dust, primary dust such as blast furnace dust, blast furnace and converter dust, and RHF (Rotary Hearth Furnace) dust, secondary dust, and roasting of zinc concentrate, for example, may be used as the raw material.

Specifically, in the dehalogenation washing process 101, the electric arc furnace dust 1 as a raw material containing a zinc compound being zinc oxide or the like, an iron compound being iron oxide or the like, and zinc ferrite being a compound of iron and zinc is washed with a washing solution 2, so that a halogen component such as a chlorine component and a fluorine component, absorbed on the electric arc furnace dust 1, is eluted and separated from the electric arc furnace dust 1. Cleaned electric arc furnace dust 3 is obtained in this manner. The washed electric arc furnace dust 3 is delivered to the next high-temperature high-alkaline processing process 102. As the washing solution 2, an aqueous solution of a strong alkaline agent having a high effect of eluting the halogen component from the electric arc furnace dust 1 can be used suitably. Specifically, a sodium hydroxide aqueous solution that is an aqueous solution of such a strong alkaline agent can be used as the washing solution 2 suitably.

Typically, the electric arc furnace dust 1 crushed to a predetermined size or less in advance is immersed in the sodium hydroxide aqueous solution as the washing solution 2, the electric arc furnace dust 1 immersed in this manner is stirred in the sodium hydroxide aqueous solution for a predetermined time to be made into slurry, and the halogen component adhering to the electric arc furnace dust 1 in slurry form is eluted therefrom. In a case where a pH value of the electric arc furnace dust 1 in slurry form is less than 8.5, the amount of the halogen component eluted from the electric arc furnace dust 1 cannot be obtained in a practical amount, and unnecessary elution of a zinc component or a lead component from the electric arc furnace dust 1 is caused. Therefore, the pH value is preferably 8.5 or more. In addition, in a case where the pH value of the electric arc furnace dust 1 in slurry form exceeds 10.5, the zinc component is extracted from the electric arc furnace dust 1, and the amount of the zinc component in the washed electric arc furnace dust 3 to be delivered to the next step is reduced. Therefore, the pH value is preferably 10.5 or less. Correspondingly, a pH value of the sodium hydroxide aqueous solution as the washing solution 2 is preferably set in a range of 8.5 or more and 10.5 or less. A used washing solution 4 obtained by washing of the electric arc furnace dust 1 with the washing solution 2 and containing the eluted halogen component that has been absorbed on the electric arc furnace dust 1 may be discharged as a waste solution or be used repeatedly as the washing solution 2 washing the electric arc furnace dust 1 again in a range in which further elution of the chlorine component is possible. The reason why the dehalogenation washing process 101 is provided before the high-temperature high-alkaline processing process 102 and the tailing electrolyte leaching process 103 is to enable decomposition of zinc ferrite in the electric arc furnace dust 1 and extraction of the zinc component to be performed more appropriately. In a case of using the electric arc furnace dust 1 in which adhesion of the halogen component such as a chlorine component and a fluorine component has been reduced in advance, the dehalogenation washing process 101 may be omitted.

Next, the high-temperature high-alkaline processing process 102 includes a contact process 102a of bringing the washed electric arc furnace dust 3 and a tailing electrolyte 14 containing sodium hydroxide into contact with each other, a heating and temperature raising process 102b of heating the washed electric arc furnace dust 3 and the tailing electrolyte 14 brought into contact with each other in the contact process 102a to raise the temperature of the washed electric arc furnace dust 3 and the tailing electrolyte 14 to a temperature reaching the boiling point of water exhibiting a boiling point rise, and a concentration maintaining process 102c of maintaining, for a predetermined time, the concentration of an alkaline agent contained in the tailing electrolyte 14 at the time of stop of evaporation of a water content of an aqueous alkali hydroxide solution in the tailing electrolyte 14 after the temperature of the washed electric arc furnace dust 3 and the tailing electrolyte 14 reaches the boiling point. By contact of the washed electric arc furnace dust 3 with the alkaline agent whose concentration is maintained in the concentration maintaining process 102c for a predetermined time, a decomposition reaction decomposing zinc ferrite into a zinc oxide component and an iron oxide component is completed.

Specifically, in the contact process 102a, assuming that the tailing electrolyte 14 containing sodium hydroxide has already been obtained in the electrowinning process 105 performed and is available, the tailing electrolyte 14, in more detail, sodium hydroxide contained therein and the washed electric arc furnace dust 3 are brought into contact with each other from a viewpoint of reusing sodium hydroxide being a strong alkaline agent in the tailing electrolyte 14 without discarding the tailing electrolyte 14 wastefully. Subsequently, in the heating and temperature raising process 102b, the washed electric arc furnace dust 3 and the tailing electrolyte 14 containing sodium hydroxide in contact with each other as explained are heated, and the water content of the sodium hydroxide aqueous solution in the tailing electrolyte 14 is caused to evaporate with rise of the boiling point (100°C) of water in the sodium hydroxide aqueous solution in the presence of zinc ferrite being a slightly soluble material in the washed electric arc furnace dust 3. When the temperature of the washed electric arc furnace dust 3 and the tailing electrolyte 14 whose temperature is raised by heating enters a temperature range of 150°C or more and 250°C or less, the concentration of sodium hydroxide in the tailing electrolyte 14 is made to enter to a concentration range of 70% by weight or more and less than 100% by weight, more preferably 80% by weight or more and less than 100% by weight while the temperature of the washed electric arc furnace dust 3 and the tailing electrolyte 14 is maintained. To make the concentration of sodium hydroxide in the tailing electrolyte 14 enter into this concentration range, it typically suffices to wait until the water content of the sodium hydroxide aqueous solution in the tailing electrolyte 14 evaporates completely. Subsequently, in the concentration maintaining process 102c, a lid of an accommodating vessel accommodating the washed electric arc furnace dust 3 and the tailing electrolyte 14 in which the water content of the sodium hydroxide aqueous solution has evaporated completely is closed in such a manner that an accommodating space therefor is sealed, for example, an environment accommodating them is switched from an open system to a closed system, and a state of the closed system, that is, a state where the temperature of the washed electric arc furnace dust 3 and the tailing electrolyte 14 is in a temperature range of 150°C or more and 250°C or less and the concentration of sodium hydroxide in the tailing electrolyte 14 is in a concentration range of 70% by weight or more and less than 100% by weight, more preferably, 80% by weight or more and less than 100% by weight is maintained for a predetermined time that is 15 minutes or more and 5 hours or less. Thus, when a predetermined time during which the temperature range and the concentration range described above are maintained passes, decomposition of zinc ferrite in the washed electric arc furnace dust 3 in which decomposition has started by continuous contact with sodium hydroxide in the tailing electrolyte 14 is completed. That is, the conditions of the temperature range, the concentration range, and the predetermined time for maintaining these ranges are essential conditions for completion of decomposition of zinc ferrite in the washed electric arc furnace dust 3. These conditions are set by considering the following problems. When the temperature of the washed electric arc furnace dust 3 and the tailing electrolyte 14 is less than 150°C, zinc ferrite is not dissolved, and when the temperature of the washed electric arc furnace dust 3 and the tailing electrolyte 14 exceeds 250°C, energy equal to or more than the energy amount enough to dissolve zinc ferrite is unnecessarily wasted, so that the energy consumption increases. Further, the problem that zinc ferrite is not dissolved becomes remarkable when the concentration of sodium hydroxide in the tailing electrolyte 14 is less than 70% by weight, but is eliminated when the concentration of sodium hydroxide in the tailing electrolyte 14 is 80% by weight or more. In addition, the concentration of sodium hydroxide in the tailing electrolyte 14 being less than 100% by weight is necessary for making zinc and the like that are components other than sodium hydroxide be contained. Furthermore, when the predetermined time is less than 15 minutes, a reaction time for leaching zinc ferrite is insufficient, and when the predetermined time exceeds 5 hours, unnecessary energy is consumed after completion of the reaction of leaching zinc ferrite, and waste occurs. In the concentration maintaining process 102c, the tailing electrolyte 14 containing a zinc-containing solid 6 formed by the zinc oxide component and the iron oxide component after the decomposition of zinc ferrite is obtained. The tailing electrolyte 14 containing this zinc-containing solid 6 is cooled, and is then delivered to the next tailing electrolyte leaching process 103. In a case where a sufficient amount of the tailing electrolyte 14 for performing the electrowinning process 105 cannot be prepared before the high-temperature high-alkaline processing process 102 is performed, sodium hydroxide 5 can also be used together.

Here, a chemical formula when the tailing electrolyte 14 containing sodium hydroxide is brought into contact with the washed electric arc furnace dust 3, that is, sodium hydroxide in the tailing electrolyte 14 and zinc ferrite in the washed electric arc furnace dust 3 are brought into contact with each other to cause decomposition of zinc ferrite contained in the electric arc furnace dust 3 into the zinc oxide component and the iron oxide component in the high-temperature high-alkaline processing process 102 is represented by the following (Chemical formula 1).
[Chemical formula 1]

ZnFe₂O₄+2NaOH→ZnO+2NaFeO₂+H₂O ··· (Chemical formula 1)

An example of the alkaline agent applicable for decomposition of zinc ferrite in the high-temperature high-alkaline processing process 102 is potassium hydroxide, in addition to sodium hydroxide. Further, as an oxidizing agent added to the tailing electrolyte 14 containing sodium hydroxide in order to promote decomposition of zinc ferrite, at least one of sodium nitrate and a hydrogen peroxide solution can be used. Similarly, as a reducing agent added to the tailing electrolyte 14 containing sodium hydroxide, at least one of sodium sulfite, sodium thiosulfate, sodium dithionite, hydrazine, and zinc metals can be used. The alkaline agents, andbyextension, the oxidizing agents and the reducing agents described above are used depending on the state of impurities. Further, since the high-temperature high-alkaline processing process 102 is performed in a high temperature environment, the water content of the tailing electrolyte 14 and sodium hydroxide that has become an aqueous solution once evaporate and become water vapor by introducing them into this step. Accordingly, while this water vapor is cooled and liquified through a heat exchanger to return to water, heat obtained in the heat exchanger can be used for heating in the high-temperature high-alkaline processing process 102 and an alkaline aqueous solution leaching process 106 described in a second embodiment.

Further, it is preferable in the high-temperature high-alkaline processing process 102 to add an organic matter that reacts with chlorine to generate a volatile compound to the tailing electrolyte 14 or the aqueous solution of sodium hydroxide, and immerse the washed electric arc furnace dust 3 therein to, when the water content of the tailing electrolyte 14 or the aqueous solution of sodium hydroxide evaporates, cause a reaction of the organic matter and chlorine in the washed electric arc furnace dust 3 and volatilize a reaction product as a volatile organic chlorine compound. Accordingly, it is possible to reduce the concentration of the chlorine component in the purified electric arc furnace dust 3 and obtain the zinc-containing solid 6 in which zinc ferrite has been decomposed and the chlorine concentration has been reduced. A practical and suitable example of the organic matter is ethanol. In this case, ethanol and chlorine in the washed electric arc furnace dust 3 are caused to react with each other to generate chloroform being a volatile organic chlorine compound, and this chloroform is volatilized.

In the next tailing electrolyte leaching process 103, in a temperature environment that is typically less than the boiling point of water (100°C) , a predetermined amount of water 7 is added to the tailing electrolyte 14 containing the zinc-containing solid 6, so that a sodium hydroxide aqueous solution generated or increased in this manner and a slightly soluble material containing an iron oxide component not dissolved in this sodium hydroxide aqueous solution are obtained. In this step, the zinc oxide component obtained by decomposition of zinc ferrite and the zinc oxide component originally contained in the electric arc furnace dust 1 have been dissolved in the sodium hydroxide aqueous solution, and this sodium hydroxide aqueous solution becomes a zinc-containing sodium hydroxide aqueous solution 8. The mixture of the zinc-containing sodium hydroxide aqueous solution 8 and the slightly soluble material containing the iron oxide component is then filtered out, so that the zinc-containing sodium hydroxide aqueous solution 8 and the slightly soluble material containing the iron oxide component are separated from each other by filtering (solid-liquid separation). The zinc-containing sodium hydroxide aqueous solution 8 being a leachate from which the slightly soluble material containing the iron oxide component has been separated is delivered to the next purification process 104 with the zinc concentration increased. The slightly soluble material containing the iron oxide component is discharged as residue 9.

In the next purification process 104, metallic zinc 10 is brought into contact with the zinc-containing sodium hydroxide aqueous solution 8 to cause reduction precipitation of a metal impurity component nobler than zinc in the zinc-containing sodium hydroxide aqueous solution 8, so that a purified zinc-containing sodium hydroxide aqueous solution 11 obtained by purifying the zinc-containing sodium hydroxide aqueous solution 8 and the precipitated metal impurity component are obtained. The purification process 104 is a substitution step of applying the metallic zinc 10 (cementation step). The purified zinc-containing sodium hydroxide aqueous solution 11 is delivered to the next electrowinning process 105, and the metal impurity component is discharged as residue 12. Typically, this metallic zinc 10 is introduced into the zinc-containing sodium hydroxide aqueous solution 8 as metallic zinc powder. The zinc-containing sodium hydroxide aqueous solution 8 with the metallic zinc powder introduced thereto is stirred at high speed in a state where its temperature has been raised by heating and is maintained at a predetermined temperature, so that the cementation reaction is promoted. As a result, the metal impurity component nobler than zinc in the zinc-containing sodium hydroxide aqueous solution 8 can be precipitated quickly. Meanwhile, the metallic zinc 10 may be applied as a metallic zinc plate instead of the metallic zinc powder. In this case, the zinc-containing sodium hydroxide aqueous solution 8 is caused to flow to the metallic zinc plate fixed to be stationary and come into contact with the metallic zinc plate. The cementation reaction is similarly promoted in this manner. In a case of using the metallic zinc powder, there is also considered a state where the surface of the metallic zinc powder is entirely covered by the precipitated metal impurity component in the cementation reaction and the center portion of the metallic zinc powder cannot contribute to the cementation reaction. Meanwhile, in a case of using the metallic zinc plate, freedom of setting the area of contact between this plate and the zinc-containing sodium hydroxide aqueous solution 8 is high, and therefore the area of contact can be increased. Accordingly, it is possible to reliably promote the cementation reaction and to quickly replace the metallic zinc plate on which the metal impurity component has been precipitated. The metallic zinc plate may be rotated with respect to the flow of the zinc-containing sodium hydroxide aqueous solution 8. This purification process 104 may be omitted in a case where the amount of the metal impurity component nobler than zinc in the zinc-containing sodium hydroxide aqueous solution 8 is small.

As the purification process 104, other than the cementation step, a de-ironing and de-manganizing step of performing de-ironing and de-manganizing by air oxidation or addition of an oxidizing agent, a de-siliconization and de-fluorination step of performing de-siliconization and de-fluorination by addition of a reducing agent such as a calcium compound, and a step of performing dechlorination by addition of copper (I) oxide or silver nitrate can also be employed. These steps can also be combined as appropriate, as necessary. Considering that the halogen component has been reduced in advance in the dehalogenation washing process 101 and the chlorine component can be reduced in the high-temperature high-alkaline processing process 102, it is preferable to apply at least one of the cementation step and the de-ironing and de-manganizing step or to further apply the de-siliconization and de-fluorination step with the aim of de-siliconization.

In the next electrowinning process 105, electrolysis is performed by using the purified zinc-containing sodium hydroxide aqueous solution 11 as an electrolyte to cause precipitation of electrolytic zinc 13 being an electrolysis product on the cathode side, and the electrolytic zinc 13 is separated by solid-liquid separation and recovered as a solid. The tailing electrolyte 14 being the electrolyte after the electrolytic zinc 13 is recovered can be discharged as it is as a waste solution. However, since this solution contains sodium hydroxide, it is more reasonable and preferable to return this tailing electrolyte 14 to the high-temperature high-alkaline processing process 102 as it is. Therefore, typically, this tailing electrolyte 14 is brought into contact with the washed electric arc furnace dust 3 in the high-temperature high-alkaline processing process 102. Further, a zinc component may be left in the tailing electrolyte 14, and this tailing electrolyte 14 containing zinc may be returned to the high-temperature high-alkaline processing process 102 as it is. In this case, since this tailing electrolyte 14 is used as the electrolyte in the electrowinning process 105 after its zinc concentration has been increased at least through the high-temperature high-alkaline processing process 102 and the tailing electrolyte leaching process 103, it is preferable that this tailing electrolyte 14 contains sodium hydroxide at a concentration of 200 g/L or more and zinc at a concentration of 10 g/L or more in order to reliably perform the electrolysis.

A first experimental example in the present embodiment is described below.

### (First experimental example)

In the high-temperature high-alkaline processing process 102, the electric arc furnace dust 3 (150 g in weight) after completion of dehalogenation washing in the dehalogenation washing process 101 and the tailing electrolyte 14 (1 L in volume) containing NaOH (400 g/L in concentration) and Zn (50 g/L in concentration) were charged into an iron crucible and heated. In this step, a thermocouple sensor was charged in the tailing electrolyte 14 including the electric arc furnace dust 3. When the heating state at the time when the liquid temperature of this tailing electrolyte 14 reached 150°C was maintained, the tailing electrolyte 14 boiled at first, and the evaporation amount of the water content then decreased as the boiling point rose, due to evaporation of the water content. After a lapse of certain time after the liquid temperature of the tailing electrolyte 14 reached 160°C, evaporation of the water content stopped. In this state, the iron crucible that had been opened was closed and sealed, and the liquid temperature of the tailing electrolyte 14 was maintained at 160°C by constant temperature management and held for 1 hour. After a lapse of 1 hour, heating was stopped, and the liquid temperature of the tailing electrolyte 14 including the solid 6 was cooled to less than 100°C. Next, in the tailing electrolyte leaching process 103, pouring water to the tailing electrolyte 14 including the solid 6 was started, and the volume was made up with the water 7 to the original volume 1 L and diluted. Thereafter, stirring was performed while heating until the liquid temperature of the tailing electrolyte 14 whose volume had been made up reached 100°C, so that slurry in which the solid 6 that had been left had dissolved was obtained. This slurry was filtered and separated into the Fe residue 9 and the Zn leachate 8 (Zn concentration 110 g/L). The Fe residue 9 was washed with water and dried. Meanwhile, in the purification process 104, the Zn leachate 8 was used as an oxidizing purification solution, an oxidizing agent (KMnO₄, H₂O₂) was added thereto, stirring was performed for 1 hour, and a precipitate was filtered out. Next, this leachate was used as a Ca purification solution, CaO was added thereto, stirring was performed for 1 hour, and a precipitate was filtered out . Further, cementation of bringing this leachate into contact with the zinc metal (powder or in the form of a plate) 10 was performed at a liquid temperature of 60°C for 24 hours, so that impurities Cu, Pb, Cd, Ni, and the like were removed. Electrowinning was performed by using this leachate 11 for which a series of purification up to the cementation had been completed as an electrolyte in the electrowinning process 105. The conditions for electrowinning were as follows: the current density was set to 1200 A per square meter, the concentrations in the electrolyte were set in such a manner that the NaOH concentration was 400 g/L and the Zn concentration was 50 g/L, and the liquid temperature of the electrolyte was set to 40°C. As a result of electrolysis under those conditions, the electrolytic zinc 13 with a purity of 99.995% was obtained. Regarding the concentrations in the electrolyte, a solution supply tank for circulating and supplying a solution was used to make the Zn concentration in an electrolyte supply 55 g/L and the Zn concentration in a tailing electrolyte 50 g/L. A part of the tailing electrolyte 14 was extracted, and was used as the leachate 8 in the subsequent tailing electrolyte leaching process 103 through an alkaline aqueous solution before evaporation in the high-temperature high-alkaline processing process 102, and the Zn concentration 50 g/L in the tailing electrolyte 14 was increased to 110 g/L by tailing electrolyte leaching. Analysis values of the leachate 11 for which a series of purification up to cementation had been completed (the purified zinc-containing sodium hydroxide aqueous solution) are shown in (Table 1). All the concentrations of analyzed components were less than the lower limits of measurement.

**[Table 1]**

| Component | Fe | Co | Ni | Cu | Cd | Pb |
|---|---|---|---|---|---|---|
| g/L | <0.0005 | <0.0002 | <0.0005 | <0.0007 | <0.0002 | <0.008 |

According to the zinc recovery method of the first embodiment described above, the method includes: the high-temperature high-alkaline processing process 102 having the contact process 102a of bringing the raw material 1 containing a zinc component and zinc ferrite or the processed raw material 3 obtained by processing the raw material 1 and the aqueous alkali hydroxide solution 5 or 14 into contact with each other, the heating and temperature raising process 102b of heating the raw material 1 or the processed raw material 3 and the aqueous alkali hydroxide solution 5 or 14 brought into contact with each other in the contact process 102a to raise the temperature of the raw material 1 or the processed raw material 3 and the aqueous alkali hydroxide solution 5 or 14 to a temperature reaching a boiling point of water exhibiting a boiling point rise, and the concentration maintaining process 102c of maintaining the concentration of an alkaline agent contained in the aqueous alkali hydroxide solution 5 or 14 at the time of stop of evaporation of a water content of the aqueous alkali hydroxide solution 5 or 14 after the temperature reaches the boiling point, and decomposing zinc ferrite into a zinc oxide component and an iron oxide component by contact of the alkaline agent whose concentration is maintained in the concentration maintaining process 102c and zinc ferrite in the raw material 1 or the processed raw material 3 with each other; the first leaching process 103 of bringing the water 7 into contact with the alkaline agent, the zinc oxide component, and the iron oxide component at a temperature less than the boiling point and leaching the zinc oxide component in the aqueous alkali hydroxide solution to obtain the first zinc-containing aqueous solution 8 containing a zinc component and the slightly soluble material 9 that contains the iron oxide component and is not dissolved in the aqueous alkali hydroxide solution, thereby separating the slightly soluble material 9 and the first zinc-containing aqueous solution 8 from each other; and the zinc recovery process 105 that recovers the zinc component originating from the first zinc-containing aqueous solution 8. Accordingly, it is possible to recover zinc contained in zinc-containing dust or the like while reducing the energy consumption of heating, restraining the cost increase and the increase in environmental burden, and reliably decomposing zinc ferrite contained in the zinc-containing dust or the like. Further, by maintaining the concentration of the alkaline agent contained in the aqueous alkali hydroxide solution 5, 14, or 22 at the time of stop of evaporation of the water content of the aqueous alkali hydroxide solution 5, 14, or 22 after the temperature reaches the boiling point in the concentration maintaining process 102c, pressure resistance of a reaction vessel such as a sealed vessel in this step can be lowered. Accordingly, the structure of the reaction vessel can be simplified, so that the cost can be reduced.

According to the zinc ferrite decomposition method of the present embodiment, the method includes: the contact process 102a of bringing the zinc-ferrite-containing material 1 or 3 containing zinc ferrite and the aqueous alkali hydroxide solution 5 or 14 into contact with each other; the heating and temperature raising process 102b of heating the zinc-ferrite-containing material 1 or 3 and the aqueous alkali hydroxide solution 5 or 14 brought into contact with each other in the contact process 102a to raise the temperature of the zinc-ferrite-containing material 1 or 3 and the aqueous alkali hydroxide solution 5 or 14 to a temperature reaching a boiling point of water exhibiting a boiling point rise; and the concentration maintaining process 102c of maintaining the concentration of an alkaline agent contained in the aqueous alkali hydroxide solution 5 or 14 at the time of stop of evaporation of a water content of the aqueous alkali hydroxide solution 5 or 14 after the temperature reaches the boiling point, and decomposes zinc ferrite into a zinc oxide component and an iron oxide component by contact of the alkaline agent whose concentration is maintained in the concentration maintaining process 102c and zinc ferrite in the zinc-ferrite-containing material 1 or 3 with each other. Accordingly, it is possible to reliably decompose zinc ferrite contained in zinc-containing dust or the like while reducing the energy consumption of heating and restraining the cost increase and the increase in environmental burden. Further, by maintaining the concentration of the alkaline agent contained in the aqueous alkali hydroxide solution 5 or 14 at the time of stop of evaporation of the water content of the aqueous alkali hydroxide solution 5 or 14 after the temperature reaches the boiling point in the concentration maintaining process 102c, pressure resistance of a reaction vessel such as a sealed vessel in this step can be lowered. Accordingly, the structure of the reaction vessel can be simplified, so that the cost can be reduced.

### (Second embodiment)

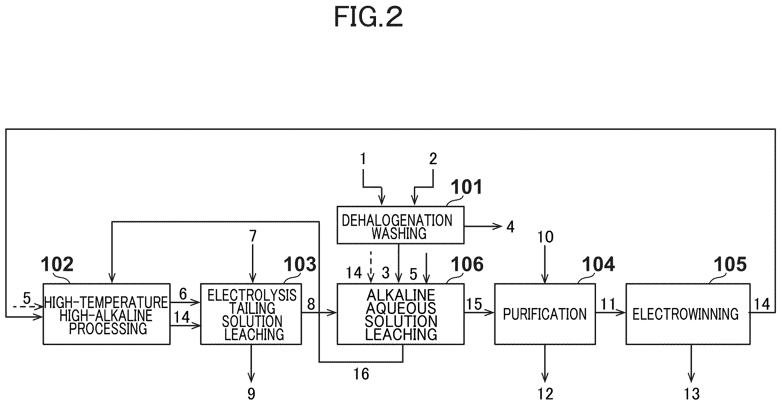

Next, a zinc recovery method and a zinc ferrite decomposition method according to a second embodiment of the present invention are described in detail with reference to FIG. 2.

FIG. 2 is a process diagram of the zinc recovery method including the zinc ferrite decomposition method according to the present embodiment.

As illustrated in FIG. 2, the zinc recovery method according to the present embodiment is different from the zinc recovery method according to the first embodiment mainly in including an alkaline aqueous solution leaching process 106 immediately after the dehalogenation washing process 101. The present embodiment is described focusing on this difference. Identical constituent elements are denoted by like reference signs, and descriptions thereof are omitted or simplified.

Specifically, the alkaline aqueous solution leaching process 106 is provided immediately after the dehalogenation washing process 101. The reason for providing the dehalogenation washing process 101 before the alkaline aqueous solution leaching process 106 is to enable extraction of a zinc component in the electric arc furnace dust 1 to be performed more appropriately. The alkaline aqueous solution leaching process 106 is a step of, prior to the high-temperature high-alkaline processing process 102, bringing the washed electric arc furnace dust 3 into contact with a sodium hydroxide aqueous solution being an aqueous solution of the sodium hydroxide 5, leaching the zinc component contained in the washed electric arc furnace dust 3 in the sodium hydroxide aqueous solution to extract the zinc component selectively, thereby obtaining a zinc-containing sodium hydroxide aqueous solution 15 containing the zinc component and a slightly soluble material 16 containing zinc ferrite not dissolved in the sodium hydroxide aqueous solution. The mixture of the zinc-containing sodium hydroxide aqueous solution 15 and the slightly soluble material 16 containing the iron oxide component is then filtered out, so that the zinc-containing sodium hydroxide aqueous solution 15 and the slightly soluble material 16 containing the iron oxide component are separated from each other by filtering (solid-liquid separation). The reason for using sodium hydroxide as a strong alkaline agent is that sodium hydroxide enables efficient extraction of the zinc component and can also be shared in the high-temperature high-alkaline processing process 102. A chemical formula in a case of bringing the electric arc furnace dust 3 into contact with the sodium hydroxide aqueous solution to dissolve the zinc component contained in the washed electric arc furnace dust 3 in the sodium hydroxide aqueous solution and selectively extract the zinc component, thereby obtaining the zinc-containing sodium hydroxide aqueous solution 15 containing the zinc component is represented by the following (Chemical formula 2).
[Chemical formula 2]

ZnO+2NaOH+H₂O→2Na⁺+ [Zn (OH) ₄]²⁻ ··· (Chemical formula 2)

The zinc-containing sodium hydroxide aqueous solution 15 obtained in this manner is delivered to the next purification process 104. Meanwhile, the slightly soluble material 16 obtained and containing zinc ferrite is delivered to the high-temperature high-alkaline processing process 102, and this zinc ferrite is decomposed into a zinc oxide component and an iron oxide component. The zinc-containing solid 6 in which zinc ferrite has been decomposed is delivered to the next tailing electrolyte leaching process 103 to become the zinc-containing sodium hydroxide aqueous solution 8. The zinc-containing sodium hydroxide aqueous solution 8 is delivered to the alkaline aqueous solution leaching process 106, and the zinc component contained in the zinc-containing sodium hydroxide aqueous solution 8 is selectively extracted to become a part of the zinc-containing sodium hydroxide aqueous solution 15.

In the alkaline aqueous solution leaching process 106, in a case where the process in the high-temperature high-alkaline processing process 102 progresses, and the zinc-containing sodium hydroxide aqueous solution 8 is generated through the tailing electrolyte leaching process 103 and is delivered to the alkaline aqueous solution leaching process 106, this zinc-containing sodium hydroxide aqueous solution 8 may be used together with the sodium hydroxide 5 or without using the sodium hydroxide 5 and be brought into contact with the washed electric arc furnace dust 3.

The reason for employing a so-called counterflow two-stage process in which the alkaline aqueous solution leaching process 106 is provided in addition to the high-temperature high-alkaline processing process 102, the slightly soluble material 16 containing zinc ferrite is delivered from the alkaline aqueous solution leaching process 106 to the high-temperature high-alkaline processing process 102, and the zinc-containing solid 6 in which zinc ferrite has been decomposed is delivered to the alkaline aqueous solution leaching process 106 as the zinc-containing sodium hydroxide aqueous solution 8 through the following tailing electrolyte leaching process 103 is as follows. Since the high-temperature high-alkaline processing process 102 is a step requiring a higher temperature environment than the alkaline aqueous solution leaching process 106, the energy consumption is large. Therefore, by processing the electric arc furnace dust 1 as a zinc-containing raw material containing zinc ferrite both in the high-temperature high-alkaline processing process 102 and in the alkaline aqueous solution leaching process 106, the processing time in the high-temperature high-alkaline processing process 102 can be reduced, and the energy consumption can also be reduced. For example, there is assumed a case where in the electric arc furnace dust 1, 88% of its zinc component is contained in zinc oxide and the remaining 12% is contained in zinc ferrite. In this case, processing zinc oxide, which can be dissolved in the alkaline aqueous solution leaching process 106 that can be performed at a temperature environment of 100°C or less, in the high-temperature high-alkaline processing process 102 performed at a higher temperature is not reasonable in terms of energy consumption. Extraction of 88% of the zinc component is completed in the alkaline aqueous solution leaching process 106 before the high-temperature high-alkaline processing process 102 (the entire weight of the electric arc furnace dust 3 to be processed is also reduced to about 40%), and decomposition of zinc ferrite (having 8% of the weight of the electric arc furnace dust 3 to be processed) containing the remaining 12% of the zinc component is performed in the high-temperature high-alkaline processing process 102. This method can make the energy consumption reasonable and improve efficiency. Similarly to the case regarding the high-temperature high-alkaline processing process 102, also regarding the alkaline aqueous solution leaching process 106, the tailing electrolyte 14 may be returned thereto and be used therein alone or together with a sodium hydroxide aqueous solution, as an alkaline aqueous solution for being brought into contact with the purified electric arc furnace dust 3.

A second experimental example in the present embodiment is described below.

### (Second experimental example)

In the high-temperature high-alkaline processing process 102, when the dust after alkaline aqueous solution leaching 16 which has undergone the alkaline aqueous solution leaching process 106 (in the zinc component contained, zinc oxide was dissolved by alkaline aqueous solution leaching, and the zinc component in zinc ferrite was left: 70 g in weight), and the tailing electrolyte 14 (NaOH concentration 450 g/L, Zn concentration 50 g/L: volume 100 mL) were charged into a 500 mL sealable iron vessel and heated and stirred therein, the tailing electrolyte 14 in contact with the dust after alkaline aqueous solution leaching 16 boiled in the iron vessel that was open. Further, when the temperature of the tailing electrolyte 14 reached 200°C, the iron vessel was closed and sealed, and was then held as it was for 1 hour while the temperature of the tailing electrolyte 14 was maintained in a range of 180°C or more and 200°C or less. After a lapse of 1 hour, heating was stopped, and the liquid temperature of the tailing electrolyte 14 including the solid 6 was cooled to less than 110°C. Next, in the tailing electrolyte leaching process 103, pouring water into the tailing electrolyte 14 including the solid 6 was started, and the volume was made up to the original volume 100 mL and diluted. Further, the tailing electrolyte 14 with a volume of 100 mL was added to make the entire volume 300 mL. Heating and stirring were then performed until the liquid temperature reached 100°C. After the solution was held for 1 hour as it was and it was confirmed that the zinc component had dissolved, slurry was filtered. After filtering, cake washing of a solid (iron leaching residue 9) was performed, and thereafter analysis was performed. It was confirmed that 98% or more of Zn in the electric arc furnace dust 1 had dissolved in the Zn leachate 8. The volume of the Zn leachate 8 obtained by filtering the solid (iron residue 9) was 200 mL.

In the alkaline aqueous solution leaching process 106, the electric arc furnace dust 3 after completion of dehalogenation washing in the dehalogenation washing process 101 (175 g in weight) and a solution obtained by adding the tailing electrolyte 14 (800 ml in volume) to the Zn leachate 8 after completion of the high-temperature high-alkaline processing process 102 and the tailing electrolyte leaching process 103 (200 mL in volume) were charged into a sealable reaction vessel made of iron, and were heated while being stirred until the liquid temperature reached 120°C. This liquid temperature was held for 1 hour. In this step, the liquid temperature was raised to 120°C while the reaction vessel was closed and sealed to avoid the influence of latent heat of evaporation. Thereafter, the solution was filtered, so that solid-liquid separation was performed. In this step, the solid (iron residue) 16 with a dry weight of about 70 g was collected. The collected solid was regarded as primary leaching-completion dust and was used as the raw material in the high-temperature high-alkaline processing process 102 as the next step. Meanwhile, the solution obtained by solid-liquid separation was used as the leachate 15, and the Zn concentration was increased to such a level that the NaOH concentration was 450 g/L and the Zn concentration was 120 g/L. Next, in the purification process 104, this leachate 15 was used as an oxidizing purification solution, an oxidizing agent (KMnO₄, H₂O₂) was added thereto, stirring was performed for 1 hour, and a precipitate was filtered out. Next, the leachate obtained in this manner was used as a Ca purification solution, CaO was added thereto, stirring was performed for 1 hour, and a precipitate was filtered out. Further, cementation bringing the leachate obtained in this manner into contact with the zinc metal (powder or in the form of a plate) 10 was performed at a liquid temperature of 60°C for 24 hours, so that impurities Cu, Pb, Cd, Ni, and the like were removed. Electrowinning was then performed by using the leachate 11 for which a series of purification up to the cementation had been completed as an electrolyte in the electrowinning process 105. The conditions for electrowinning were as follows: the current density was set to 12000 A per square meter, the concentrations in the electrolyte were set in such a manner that the NaOH concentration was 450 g/L and the Zn concentration was 55 g/L, and the temperature of the electrolyte was set to 60°C. As a result of electrolysis under those conditions, the electrolytic zinc 13 with a purity of 99.995% was obtained. Regarding the concentrations in the electrolyte, a solution supply tank for circulating and supplying a solution was used to make the Zn concentration in an electrolyte supply was 55 g/L and the Zn concentration in a tailing electrolyte was 50 g/L. A part of the tailing electrolyte 14 was extracted and used as the leachate 8 or 15 in each of the tailing electrolyte leaching process 103 and the alkaline aqueous solution leaching process 106 performed later, through an alkaline aqueous solution before evaporation in the high-temperature high-alkaline processing process 102. The Zn concentration 50 g/L was increased to 120 g/L by water dissolution and alkaline aqueous solution dissolution. Regarding analysis values of the leachate 11 for whichpurificationbycementationhadbeencompleted (thepurified zinc-containing sodium hydroxide aqueous solution), all the concentrations of analyzed components were less than the lower limits of measurement, similarly to the values shown in (Table 1) of the first experimental example.

According to the zinc recovery method of the second embodiment described above, the method further includes, prior to the high-temperature high-alkaline processing process 102, the second leaching process 106 of bringing the raw material 1 or the processed raw material 3 into contact with a sodium hydroxide aqueous solution to dissolve the zinc component contained in the raw material 1 or the processed raw material 3 in the sodium hydroxide aqueous solution 5 or 14, selectively extract the zinc component, and obtain the second zinc-containing aqueous solution 15 containing the zinc component and the slightly soluble material 16 containing zinc ferrite not dissolved in the sodium hydroxide aqueous solution 5 or 14, thereby separating the slightly soluble material 16 and the second zinc-containing aqueous solution 15 from each other. The slightly soluble material 16 containing zinc ferrite is delivered to the high-temperature high-alkaline processing process 102 as the processed raw material and is decomposed into the zinc oxide component and the iron oxide component, and in the first leaching process 103, the zinc oxide component is dissolved in the sodium hydroxide aqueous solution to obtain the fourth zinc-containing aqueous solution 8 containing the zinc component. Accordingly, in a mode in which the energy consumption has been reduced, it is possible to efficiently recover zinc contained in zinc-containing dust or the like while decomposing zinc ferrite contained in the zinc-containing dust or the like more reliably.

### (Third embodiment)

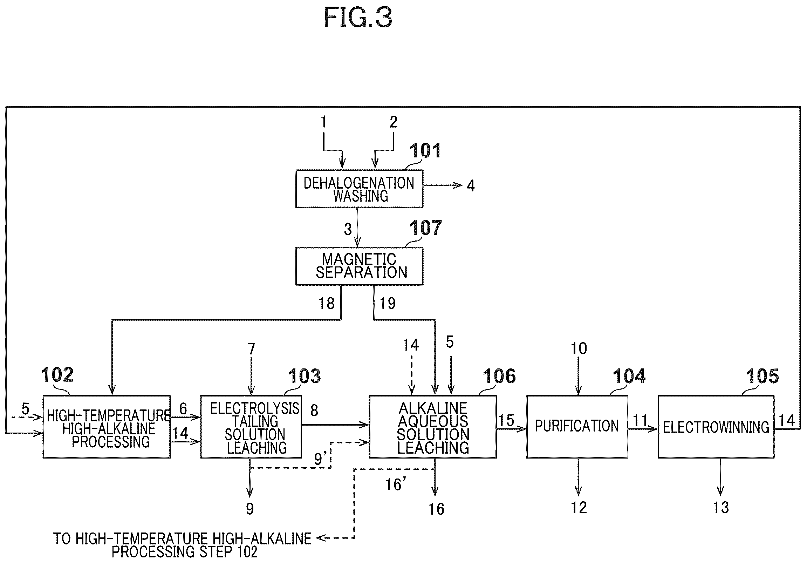

Next, a zinc recovery method and a zinc ferrite decomposition method according to a third embodiment of the present invention are described in detail with reference to FIG. 3.

FIG. 3 is a process diagram of the zinc recovery method including the zinc ferrite decomposition method according to the present embodiment.

As illustrated in FIG. 3, the zinc recovery method according to the present embodiment is different from the zinc recovery method according to the second embodiment mainly in including a magnetic separation process 107 between the dehalogenation washing process 101 and the alkaline aqueous solution leaching process 106. The present embodiment is described focusing on this difference. Identical constituent elements are denoted by like reference signs, and descriptions thereof are omitted or simplified. The magnetic separation process 107 can also be performed before the dehalogenation washing process 101 in a case where magnetic separation can be performed for the electric arc furnace dust 3 before washing. The magnetic separation process 107 may be applied to the zinc recovery method according to the first embodiment.

Specifically, the magnetic separation process 107 is provided immediately after the dehalogenation washing process 101. Prior to the alkaline aqueous solution leaching process 106, the magnetic separation process 107 applies magnetic force to the washed electric arc furnace dust 3 via a magnet that is typically an electromagnet, and separates and obtains a separated adhering material 18 formed by a magnetic component adhering to the magnet (mainly zinc ferrite and an iron component) and a residual separated material 19 other than the separated adhering material 18 in the washed electric arc furnace dust 3 which does not adhere to the magnet in accordance with the magnetic strength of components in the washed electric arc furnace dust 3. In the magnetic separation process 107, a commercially available wet high-intensity magnetic separator can be used.

The separated adhering material 18 is delivered to the high-temperature high-alkaline processing process 102 and is brought into contact with molten sodium hydroxide, so that zinc ferrite in the separated adhering material 18 is decomposed into a zinc oxide component and an iron oxide component. The zinc-containing solid 6 in which zinc ferrite has been decomposed as described above is delivered to the next tailing electrolyte leaching process 103. In the tailing electrolyte leaching process 103, the water 7 is brought into contact with the zinc-containing solid 6 in which zinc ferrite has been decomposed, so that the zinc-containing sodium hydroxide aqueous solution 8 and the residue 9 formed by a slightly soluble material containing an iron oxide component are obtained. However, in a case where the separation accuracy in the magnetic separation process 107 is poor and a large amount of zinc component is contained in the residue 9, a part 9' or the entirety 9' of the residue may be delivered to the alkaline aqueous solution leaching process 106 to cause the zinc component to be selectively extracted.

The residual separated material 19 is delivered to the alkaline aqueous solution leaching process 106, and the zinc component contained in the residual separated material 19 is selectively extracted by being dissolved in a sodium hydroxide aqueous solution, thereby obtaining the zinc-containing sodium hydroxide aqueous solution 15 containing the zinc component. At the same time, the slightly soluble material 16 not dissolved in the sodium hydroxide aqueous solution is obtained. While the zinc-containing sodium hydroxide aqueous solution 15 obtained in this manner is delivered to the next purification process 104, the slightly soluble material 16 obtained is discharged as residue. However, in a case where the separation accuracy in the magnetic separation process 107 is poor and a large amount of zinc ferrite is contained in the slightly soluble material 16, a part of or the entirety of the slightly soluble material 16 may be delivered to the high-temperature high-alkaline processing process 102 and the zinc ferrite may be decomposed into a zinc oxide component and an iron oxide component.

A third experimental example in the present embodiment is described below.

### (Third experimental example)

In the high-temperature high-alkaline processing process 102, when the magnetic dust 18 that had undergone the magnetic separation process 107 after dehalogenation washing in the dehalogenation washing process 101 (the dust 18 referring to a magnetic component adhering to a magnet in the total weight 175 g of the electric arc furnace dust and weighed 67 g) and the alkaline tailing electrolyte 14 (NaOH concentration 450 g/L, Zn concentration 50 g/L: volume 100 mL) were charged into a 500 mL sealable iron vessel and heated and stirred therein, the tailing electrolyte 14 in contact with the dust after alkaline aqueous solution leaching 16 boiled in the iron vessel that was open. Further, when the temperature of the tailing electrolyte 14 reached 180°C, the iron vessel was closed and sealed, and that tailing electrolyte 14 was held as it was for 1 hour while its temperature was maintained in a range of 180°C or more and 200°C or less. After a lapse of 1 hour, heating was stopped, and the liquid temperature of the tailing electrolyte 14 including the solid 6 was cooled to less than 120°C. Next, in the tailing electrolyte leaching process 103, pouring water into the tailing electrolyte 14 including the solid 6 was started, and the volume was made up to the original volume 100 mL and diluted. Further, the tailing electrolyte 14 with a volume of 200 mL was added to make the entire volume 300 mL. Heating and stirring were then performed until the liquid temperature reached 100°C. After the solution was held for 1 hour as it was and it was confirmed that a zinc component had dissolved, slurry was filtered. After filtering, cake washing of a solid (the iron leaching residue 9) was performed, and thereafter analysis was performed. It was confirmed that 98% or more of Zn in the electric arc furnace dust 1 had dissolved in the Zn leachate 8. The iron leaching residue 9 can be introduced into the alkaline aqueous solution leaching process 106 in a case where leaching of zinc is insufficient.

Further, in the alkaline aqueous solution leaching process 106, the non-magnetic dust 19 that had undergone the magnetic separation process 107 after completion of dehalogenation washing in the dehalogenation washing process 101 (the dust 19 referring to a component not adhering to the magnet in the total weight 175 g of the electric arc furnace dust and weighed 108 g) and the filtrate 8 after completion of the high-temperature high-alkaline processing process 102 and the tailing electrolyte leaching process 103 (300 mL in volume) were charged into a reaction vessel made of iron, and were heated while being stirred until the liquid temperature reached 120°C. This liquid temperature was held for 1 hour. After a lapse of 1 hour, the solution was filtered to perform solid-liquid separation, thereby obtaining the solid 16 (iron residue). This solid was mixed with the iron residue obtained in the high-temperature high-alkaline processing process 102 and was analyzed, and it was confirmed that 98% or more of Zn in the electric arc furnace dust had dissolved. The solution obtained by solid-liquid separation was used as the leachate 15, and the Zn concentration was increased to 120 g/L. Next, in the purification process 104, this leachate 15 was used as an oxidizing purification solution, an oxidizing agent (KMnO₄, H₂O₂) was added thereto, stirring was performed for 1 hour, and a precipitate was filtered out. Next, this leachate was used as a Ca purification solution, CaO was added thereto, stirring was performed for 1 hour, and a precipitate was filtered out. Further, cementation bringing this leachate into contact with the zinc metal (powder or in the form of a plate) 10 was performed at a liquid temperature of 60°C for 24 hours, so that impurities Cu, Pb, Cd, Ni, and the like were removed. Electrowinning was performed by using the leachate 11 for which a series of purification up to the cementation had been completed as an electrolyte in the electrowinning process 105. The conditions for electrowinning were as follows: the current density was set to 1200 A per square meter, the concentrations in the electrolyte were set in such a manner that the NaOH concentration was 450 g/L and the Zn concentration was 55 g/L, and the temperature of the electrolyte was set to 60°C. As a result of electrolysis under those conditions, the electrolytic zinc 13 with a purity of 99.995% was obtained. Regarding the concentrations in the electrolyte, a solution supply tank for circulating and supplying a solution was used to make the Zn concentration in an electrolyte supply 55 g/L and the Zn concentration in a tailing electrolyte 50 g/L. A part of the tailing electrolyte 14 was extracted and used as the leachate 8 or 15 in each of the tailing electrolyte leaching process 103 and the alkaline aqueous solution leaching process 106 performed later, through an alkaline aqueous solution before evaporation in the high-temperature high-alkaline processing process 102. The Zn concentration 50 g/L was increased to 120 g/L by water dissolution and alkaline aqueous solution dissolution. Regarding analysis values of the leachate 11 for whichpurificationbycementationhadbeencompleted (thepurified zinc-containing sodium hydroxide aqueous solution), all the concentrations of analyzed components were less than the lower limits of measurement, similarly to the values shown in (Table 1) of the first experimental example.

According to the zinc recovery method of the third embodiment described above, the method further includes the magnetic separation process 107 of, prior to the high-temperature high-alkaline processing process 102, applying magnetic force to the raw material 1 or the processed raw material 3 via a magnet to separate the first separated material 18 formed by a magnetic component adhering to the magnet and the second separated material 19 not adhering to the magnet in accordance with the magnetic strength of components in the raw material 1 or the processed raw material 3, and the third leaching process 106, to which the second separated material 19 is delivered, of leaching a zinc component contained in the second separated material 19 in the sodium hydroxide aqueous solution 5 or 14 and selectively extracting the zinc component to obtain the third zinc-containing aqueous solution 15 containing the zinc component and the slightly soluble material 16 not dissolved in the aqueous alkali hydroxide solution 5 or 14, thereby separating the slightly soluble material 16 and the third zinc-containing aqueous solution 15 from each other. The first separated material 18 is delivered to the high-temperature high-alkaline processing process 102 as the processed raw material, and zinc ferrite in the first separated material 18 is decomposed into a zinc oxide component and an iron oxide component. Accordingly, in a mode in which the energy consumption has been reduced, it is possible to efficiently recover zinc contained in zinc-containing dust or the like while decomposing zinc ferrite contained in the zinc-containing dust or the like more reliably.

### (Fourth embodiment)

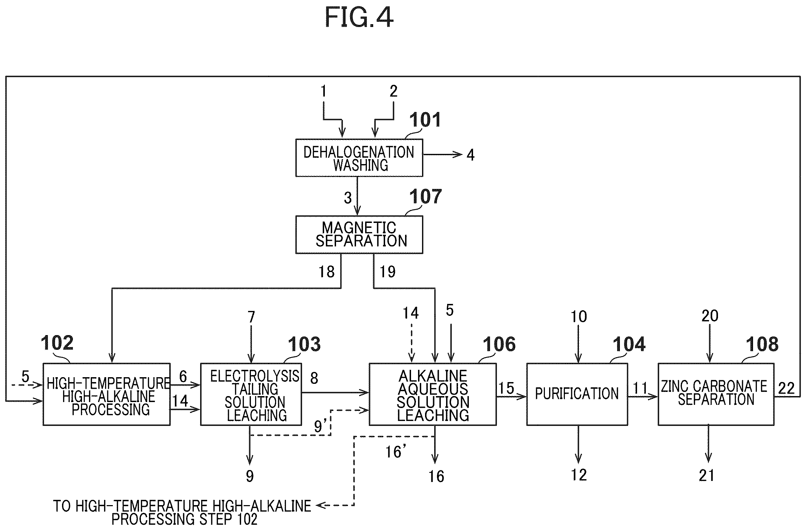

Next, a zinc recovery method and a zinc ferrite decomposition method according to a fourth embodiment of the present invention are described in detail with reference to FIG. 4.

FIG. 4 is a process diagram of the zinc recovery method including the zinc ferrite decomposition method according to the present embodiment.

As illustrated in FIG. 4, the zinc recovery method according to the present embodiment is different from the zinc recovery method according to the third embodiment mainly in including a zinc carbonate separation process 108 in place of the electrowinning process 105 as a zinc recovery step. The present embodiment is described focusing on this difference. Identical constituent elements are denoted by like reference signs, and descriptions thereof are omitted or simplified. The zinc carbonate separation process 108 may be applied to the zinc recovery methods according to the first and second embodiments in place of the electrowinning process 105.

Specifically, the zinc carbonate separation process 108 is a step of bringing a carbon dioxide gas 20 into contact with the zinc-containing sodium hydroxide aqueous solution 11 that has undergone the purification process 104, thereby separating a zinc component in the zinc-containing sodium hydroxide aqueous solution 11 as zinc carbonate 21.

Typically, the carbon dioxide 20 is blown to the zinc component in the zinc-containing sodium hydroxide aqueous solution 11 to cause precipitation of zinc carbonate as represented by the following (Chemical formula 3), and the zinc carbonate precipitated in this manner is filtered, thereby obtaining the solid zinc carbonate 21. The zinc carbonate 21 can also be used as a product by being dried after washing with water. In addition, since a residual solution 22 of the zinc carbonate separation process 108 contains sodium hydroxide, the residual solution 22 is returned to the high-temperature high-alkaline processing process 102. It is also possible to obtain zinc oxide by roasting the solid zinc carbonate 21.
[Chemical formula 3]

Na₂[Zn(OH)₄]+CO₂→ZnCO₃+2NaOH+H₂O ··· (Chemical formula 3)

A fourth experimental example in the present embodiment is described below.

### (Fourth experimental example)

Similarly to the third experimental example, the steps up to the purification process 104 were performed, while the Zn concentration 50 g/L was increased to 120 g/L by dissolution in an alkaline aqueous solution. The carbon dioxide gas 20 was blown into the leachate 11 for which purification had been completed to cause precipitation of zinc carbonate 21. Thereafter, filtering was performed so as to recover the zinc carbonate 21. Regarding analysis values of the leachate 11 for which purification by cementation had been completed (the purified zinc-containing sodium hydroxide aqueous solution), all the concentrations of analyzed components were less than the lower limits of measurement, similarly to the values shown in (Table 1) in the first experimental example.

According to the zinc recovery method of the fourth embodiment described above, the zinc recovery step includes a zinc carbonate separation step of separating a zinc component in the zinc-containing aqueous solution 8 or 15 or a leachate 11 obtained by purifying the zinc-containing aqueous solution 8 or 15 as the zinc carbonate 21 and obtaining the residual solution 22 from which the zinc carbonate 21 has been separated. The residual solution 22 is delivered with an aqueous alkali hydroxide solution and the zinc component left therein to the high-temperature high-alkaline processing process 102, and the aqueous alkali hydroxide solution in the residual solution 22 and the raw material 1 or the processed raw material 3, 16, or 18 are brought into contact with each other. Accordingly, zinc carbonate in which mixing of impurities has been reduced can be recovered stably with a high yield.

In the present invention, the shapes, arrangements, numbers, and the like of constituent elements are not limited to those described in the above embodiments, and it is needless to mention that changes can be appropriately made without departing from the scope of the invention, such as appropriately replacing these constituent elements with other members having equivalent operational effects.

### INDUSTRIAL APPLICABILITY

As described above, according to the present invention, it is possible to provide a zinc recovery method that can recover zinc contained in zinc-containing dust or the like while reducing the energy consumption of heating to restrain the cost increase and the increase in environmental burden, and reliably decomposing zinc ferrite contained in zinc-containing dust or the like, and a zinc ferrite decomposition method of decomposing the zinc ferrite. Accordingly, based on the universal characteristics thereof, it is expected that these methods can be applied broadly, in addition to electric arc furnace dust generated in smelting and refining scrap in electric furnace steelmaking as one of iron making processes, to primary dust such as blast furnace dust, blast furnace and converter dust, and RHF (Rotary Hearth Furnace) dust, secondary dust, zinc containing dust such as roasting of zinc concentrate, and the like as a raw material.

### REFERENCE SIGNS LIST

- 1: electric arc furnace dust

- 2: washing solution
- 3: processed electric arc furnace dust
- 4: used washing solution
- 5: sodium hydroxide
- 6: zinc-containing solid
- 7: water
- 8: zinc-containing sodium hydroxide aqueous solution
- 9: residue
- 10: metallic zinc
- 11: zinc-containing sodium hydroxide aqueous solution
- 12: residue
- 13: electrolytic zinc
- 14: tailing electrolyte
- 15: zinc-containing sodium hydroxide aqueous solution
- 16: slightly soluble material
- 18: separated adhering material
- 19: residual separated material
- 21: zinc carbonate
- 22: residue
- 101: halogenation washing process
- 101: dehalogenation washing process
- 102: high-temperature high-alkaline processing process
- 103: tailing electrolyte leaching process
- 104: purification process
- 105: zinc recovery process
- 105: electrowinning process
- 106: alkaline aqueous solution leaching process
- 107: magnetic separation process
- 108: zinc carbonate separation process

## Claims

1. A zinc recovery method comprising:
a high-temperature high-alkaline processing step that includes a contact step of bringing a raw material containing a zinc component and zinc ferrite or a processed raw material obtained by processing the raw material and an aqueous alkali hydroxide solution into contact with each other, a heating and temperature raising step of heating the raw material or the processed raw material and the aqueous alkali hydroxide solution brought into contact with each other in the contact step, and raising a temperature of the raw material or the processed raw material and the aqueous alkali hydroxide solution to a temperature reaching a boiling point of water exhibiting a boiling point rise, and a concentration maintaining step of maintaining a concentration of an alkaline agent contained in the aqueous alkali hydroxide solution at a time of stop of evaporation of a water content of the aqueous alkali hydroxide solution after the temperature reaches the boiling point, and that decomposes the zinc ferrite into a zinc oxide component and an iron oxide component by contact of the alkaline agent whose concentration is maintained in the concentration maintaining step and the zinc ferrite in the raw material or the processed raw material with each other;
a first leaching step of, at a temperature less than the boiling point, bringing water into contact with the alkaline agent, the zinc oxide component, and the iron oxide component and leaching the zinc oxide component in an aqueous alkali hydroxide solution to obtain a first zinc-containing aqueous solution containing a zinc component and a slightly soluble material containing an iron oxide component not dissolved in the aqueous alkali hydroxide solution, thereby separating the slightly soluble material and the first zinc-containing aqueous solution from each other; and
a zinc recovery step of recovering a zinc component originating from the first zinc-containing aqueous solution.

2. The zinc recovery method according to claim 1, wherein
the alkaline agent is sodium hydroxide or potassium hydroxide, and
in the high-temperature high-alkaline processing step, at least one of a hydrogen peroxide solution and sodium nitrate as an oxidizing agent or at least one of sodium sulfite, sodium thiosulfate, sodium dithionite, hydrazine, and a zinc metal as a reducing agent is added to the aqueous alkali hydroxide solution.

3. The zinc recovery method according to claim 1 or 2, wherein
the alkaline agent is sodium hydroxide, and
the method further comprises, prior to the high-temperature high-alkaline processing step, a halogen washing step of washing the raw material with a sodium hydroxide aqueous solution with a pH value in a range of 8.5 or more and 10.5 or less to wash a halogen component contained in the raw material.

4. The zinc recovery method according to claim 1 or 2, further comprising a purification step of bringing metallic zinc into contact with the first zinc-containing aqueous solution to cause reduction precipitation of a metal impurity component nobler than zinc in the first zinc-containing aqueous solution, thereby purifying the first zinc-containing aqueous solution.

5. The zinc recovery method according to claim 4, wherein the zinc recovery step includes an electrowinning step of performing electrolysis using the first zinc-containing aqueous solution or the purified first zinc-containing aqueous solution as an electrolyte to obtain electrolytic zinc and a tailing electrolyte, the tailing electrolyte is delivered in a state with an aqueous alkali hydroxide solution and a zinc component left therein to the high-temperature high-alkaline processing step, and the aqueous alkali hydroxide solution in the tailing electrolyte and the raw material or the processed raw material are brought into contact with each other.

6. The zinc recovery method according to claim 4, wherein the zinc recovery step includes a zinc carbonate separation step of separating the zinc component in the first zinc-containing aqueous solution or the purified first zinc-containing aqueous solution as zinc carbonate and obtaining a residual solution from which the zinc carbonate has been separated, the residual solution is delivered in a state with an aqueous alkali hydroxide solution and a zinc component left therein to the high-temperature high-alkaline processing step, and the aqueous alkali hydroxide solution in the residual solution and the raw material or the processed raw material are brought into contact with each other.

7. The zinc recovery method according to claim 1 or 2, further comprising, prior to the high-temperature high-alkaline processing step, a second leaching step of bringing the raw material or the processed raw material into contact with a sodium hydroxide aqueous solution to dissolve the zinc component contained in the raw material or the processed raw material in the sodium hydroxide aqueous solution, selectively extract the zinc component, and obtain a second zinc-containing aqueous solution containing the zinc component and a slightly soluble material containing zinc ferrite not dissolved in the sodium hydroxide aqueous solution, thereby separating the slightly soluble material and the second zinc-containing aqueous solution from each other, wherein
the slightly soluble material containing zinc ferrite is delivered to the high-temperature high-alkaline processing step as the processed raw material and is decomposed into a zinc oxide component and an iron oxide component, and in the first leaching step, the zinc oxide component is dissolved in the sodium hydroxide aqueous solution to obtain a fourth zinc-containing aqueous solution containing a zinc component.

8. The zinc recovery method according to claim 7, wherein the fourth zinc-containing aqueous solution is delivered to the second leaching step, and the zinc component contained in the fourth zinc-containing aqueous solution is selectively extracted to become a portion of the second zinc-containing aqueous solution.

9. The zinc recovery method according to claim 7, wherein
the alkaline agent is sodium hydroxide, and
the method further comprises, prior to the second leaching step, a halogen washing step of washing the raw material with a sodium hydroxide aqueous solution with a pH value in a range of 8.5 or more and 10.5 or less to wash a halogen component contained in the raw material and make the material into a processed raw material.

10. The zinc recovery method according to claim 7, further comprising a purification step of bringing metallic zinc into contact with the second zinc-containing aqueous solution to cause reduction precipitation of a metal impurity component nobler than zinc in the second zinc-containing aqueous solution, thereby purifying the second zinc-containing aqueous solution.

11. The zinc recovery method according to claim 10, wherein the zinc recovery step includes an electrowinning step of performing electrolysis using the second zinc-containing aqueous solution or the purified second zinc-containing aqueous solution as an electrolyte to obtain electrolytic zinc and a tailing electrolyte, the tailing electrolyte is delivered in a state with an aqueous alkali hydroxide solution and a zinc component left therein to the high-temperature high-alkaline processing step, and the aqueous alkali hydroxide solution in the tailing electrolyte and the raw material or the processed raw material are brought into contact with each other.

12. The zinc recovery method according to claim 10, wherein the zinc recovery step includes a zinc carbonate separation step of separating the zinc component in the second zinc-containing aqueous solution or the purified second zinc-containing aqueous solution as zinc carbonate and obtaining a residual solution from which the zinc carbonate has been separated, the residual solution is delivered in a state with an aqueous alkali hydroxide solution and a zinc component left therein to the high-temperature high-alkaline processing step, and the aqueous alkali hydroxide solution in the residual solution and the raw material or the processed raw material are brought into contact with each other.

13. The zinc recovery method according to claim 1 or 2, further comprising:
a magnetic separation step of, prior to the high-temperature high-alkaline processing step, applying magnetic force to the raw material or the processed raw material via a magnet to separate a first separated material formed by a component adhering to the magnet and a second separated material not adhering to the magnet in accordance with magnetic strength of components in the raw material or the processed raw material; and
a third leaching step, to which the second separated material is delivered, of leaching a zinc component contained in the second separated material in a sodium hydroxide aqueous solution and selectively extracting the zinc component to obtain a third zinc-containing aqueous solution containing the zinc component and a slightly soluble material not dissolved in the aqueous alkali hydroxide solution, thereby separating the slightly soluble material and the third zinc-containing aqueous solution from each other, wherein
the first separated material is delivered to the high-temperature high-alkaline processing step as the processed raw material, and the zinc ferrite in the first separated material is decomposed into the zinc oxide component and the iron oxide component.

14. The zinc recovery method according to claim 13, wherein the alkaline agent is sodium hydroxide, and the method further comprises, prior to the third leaching step, a halogen washing step of washing the raw material with a sodium hydroxide aqueous solution with a pH value in a range of 8.5 or more and 10.5 or less to wash a halogen component contained in the raw material and make the raw material into a processed raw material.

15. The zinc recovery method according to claim 13, further comprising a purification step of bringing metallic zinc into contact with the third zinc-containing aqueous solution to cause reduction precipitation of a metal impurity component nobler than zinc in the third zinc-containing aqueous solution, thereby purifying the third zinc-containing aqueous solution.

16. The zinc recovery method according to claim 15, wherein the zinc recovery step includes an electrowinning step of performing electrolysis using the third zinc-containing aqueous solution or the purified third zinc-containing aqueous solution as an electrolyte to obtain electrolytic zinc and a tailing electrolyte, the tailing electrolyte is delivered in a state with an aqueous alkali hydroxide solution and a zinc component left therein to the high-temperature high-alkaline processing step, and the aqueous alkali hydroxide solution in the tailing electrolyte and the raw material or the processed raw material are brought into contact with each other.

17. The zinc recovery method according to claim 15, wherein the zinc recovery step includes a zinc carbonate separation step of separating the zinc component in the third zinc-containing aqueous solution or the purified third zinc-containing aqueous solution as zinc carbonate and obtaining a residual solution from which the zinc carbonate has been separated, the residual solution is delivered in a state with an aqueous alkali hydroxide solution and a zinc component left therein to the high-temperature high-alkaline processing step, and the aqueous alkali hydroxide solution in the residual solution and the raw material or the processed raw material are brought into contact with each other.

18. A zinc ferrite decomposition method comprising:
a contact step of bringing a zinc-ferrite-containing material containing zinc ferrite and an aqueous alkali hydroxide solution into contact with each other;
a heating and temperature raising step of heating the zinc-ferrite-containing material and the aqueous alkali hydroxide solution brought into contact with each other in the contact step to raise a temperature of the zinc-ferrite-containing material and the aqueous alkali hydroxide solution to a temperature reaching a boiling point of water exhibiting a boiling point rise; and
a concentration maintaining step of maintaining a concentration of an alkaline agent contained in the aqueous alkali hydroxide solution at a time of stop of evaporation of a water content of the aqueous alkali hydroxide solution after the temperature reaches the boiling point, wherein
the zinc ferrite is decomposed into a zinc oxide component and an iron oxide component by contact of the alkaline agent whose concentration is maintained in the concentration maintaining step and the zinc ferrite in the zinc-ferrite-containing material with each other.
